# DEMANDE DE BREVET EUROPEEN

(11) **EP 4 012 319 A1**
(43) Date de publication de la demande: **15.06.2022**
(21) Numéro de dépôt: 21214190.7
(22) Date de dépôt: 13.12.2021
(51) Int. Cl.: F28D 20/00

(54) **DISPOSITIF DE STOCKAGE REGENERATIF**

(30) Priorité: 14.12.2020 FR 2013129
(71) Demandeur: Commissariat à l'énergie atomique et aux énergies alternatives, 75015 Paris (FR)
(72) Inventeur: BENTIVOGLIO, Fabrice, 38054 GRENOBLE CEDEX 09 (FR); BELLENOT, Grégoire, 33700 MERIGNAC (FR)
(74) Mandataire: Brevalex

(57) **Abrégé**

L'invention concerne un dispositif de stockage régénératif comprenant :
- une cuve (100) de circulation d'un fluide caloporteur entre un piquage chaud (110a) et un piquage froid (110b),
- un milieu poreux (200), remplissant au moins en partie la cuve (100) entre le piquage chaud (110a) et le piquage froid (110b), et délimité par une première face (200a) et une deuxième face (200b), et reliées par une surface latérale (200c), le milieu poreux (200) étant un milieu au sein duquel des échanges thermiques sont susceptibles d'intervenir avec le fluide caloporteur,
le dispositif étant caractérisé en ce que le milieu poreux (200) comprend, de la première face (200a) vers la deuxième face (200b), une première strate (210) d'un premier matériau dispersé d'une première granulométrie et une deuxième strate (220) d'un deuxième matériau dispersé d'une deuxième granulométrie supérieure à la première granulométrie.

## Description

### DOMAINE TECHNIQUE

L'invention se rapporte au domaine du stockage thermique réversible. En particulier, la présente invention concerne un dispositif de stockage thermique régénératif. Le dispositif comprend notamment une cuve remplie d'un milieu poreux formé par un matériau dispersé et au sein duquel des échanges thermiques sont susceptibles d'intervenir avec un fluide caloporteur traversant ledit milieu poreux.

La présente invention propose à cet égard un agencement particulier du milieu poreux permettant d'optimiser le stockage de la chaleur.

### ÉTAT DE LA TECHNIQUE ANTÉRIEURE

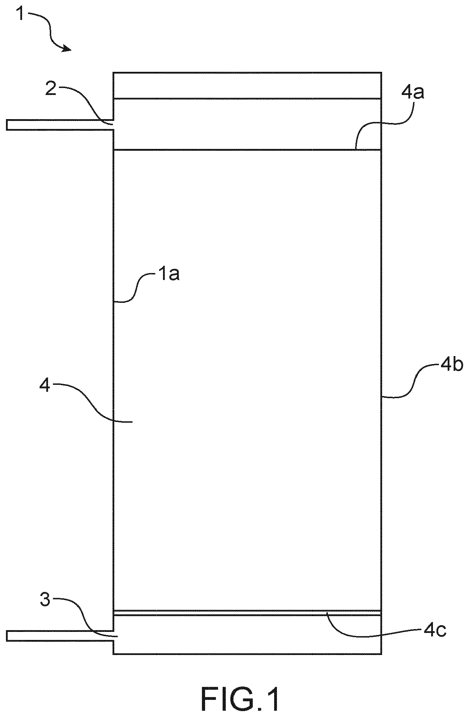

La figure 1 est une représentation schématique d'un dispositif de stockage régénératif connu de l'homme du métier. A cet égard, ce dispositif de stockage régénératif comprend :
- une cuve 1 de circulation d'un fluide caloporteur, selon l'un ou l'autre d'un premier et d'un deuxième sens de circulation entre deux piquages de ladite cuve, dits, respectivement, piquage chaud 2 et piquage froid 3,
- un milieu poreux 4, remplissant au moins en partie la cuve entre le piquage chaud 2 et le piquage froid 3, et destiné à être le siège d'échanges thermiques avec le fluide caloporteur lorsque ce dernier circule selon l'un ou l'autre du premier et du deuxième sens dans ledit milieu.

Plus particulièrement, le milieu poreux 4 est délimité par deux faces, dites première face 4a et deuxième face 4c, essentiellement parallèles entre elles et reliées par une surface latérale 4b. La première face 4a et la deuxième face 4c sont notamment agencées pour être traversées selon l'un ou l'autre du premier et du deuxième sens lorsque le fluide caloporteur circule dans le milieu poreux 4.

Le milieu poreux 4 comprend, par ailleurs, de la matière dispersée, par exemple des cailloux et/ou du gravier éventuellement mélangés avec du sable.

La cuve 1 peut, pour sa part, présenter une forme cylindrique d'une hauteur et d'un diamètre d'une dizaine de mètres. Par exemple, la cuve peut être d'une hauteur de 10 mètres et d'un diamètre de 15 mètres.

La surface latérale 4b du milieu poreux 4 est par ailleurs au contact d'une surface interne la de la cuve de sorte que le fluide caloporteur circule préférentiellement dans le milieu poreux 4.

Le sens de circulation du fluide caloporteur dans la cuve, et plus particulièrement dans le milieu poreux, permet soit de stocker de l'énergie thermique au niveau dudit milieu, soit d'imposer à ce milieu de transférer de l'énergie thermique au fluide. En d'autres termes, le dispositif peut fonctionner de manière réversible.

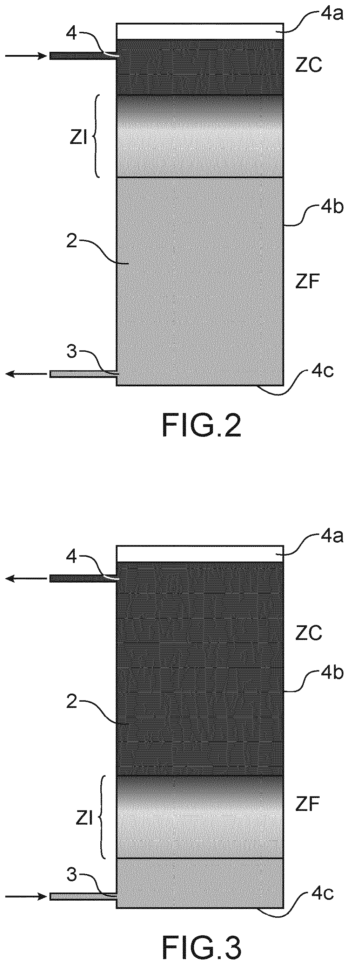

Notamment, lorsqu'il est chaud, à savoir à une température supérieure à celle du milieu poreux4, le fluide caloporteur circule du piquage chaud 2 vers le piquage froid 3 (par définition selon le premier sens, figure 2). Au contact du milieu poreux 4, le fluide caloporteur cède en partie sa chaleur au milieu poreux 4 et ressort à une température plus faible au niveau du piquage froid 3. Ce cycle d'échange thermique, noté charge, permet de stocker de l'énergie thermique apportée par le fluide caloporteur.

A l'inverse, lorsqu'il est froid, à savoir à une température inférieure à celle du milieu poreux, le fluide caloporteur circule du piquage froid vers le piquage chaud (par définition selon le deuxième sens, figure 3). Au contact du milieu poreux, le fluide caloporteur capte une partie de la chaleur stockée par le milieu poreux et ressort à une température plus élevée au niveau du piquage chaud. Ce cycle d'échange thermique, noté décharge, permet de libérer de l'énergie thermique stockée par le milieu poreux en vue de son utilisation.

Toutefois, lorsque le fluide caloporteur circule, par exemple selon le premier sens de circulation, il se crée dans le milieu poreux une zone chaude et une zone froide et entre lesquelles vient s'intercaler une zone intermédiaire, autrement nommée zone de gradient thermique, qui est révélatrice d'échanges thermiques imparfaits.

Ainsi, il est possible d'optimiser ces échanges en réduisant l'étendue (l'épaisseur) de la zone intermédiaire.

Ce but peut notamment être atteint en imposant un profil de vitesse d'entrée et/ou de sortie du fluide caloporteur le plus uniforme possible au niveau de chaque section du milieu poreux.

A cette fin, il a pu être proposé notamment dans les documents [1] et [2] cités à la fin de la description, de mettre en œuvre, à l'aplomb de l'une et/ou de l'autre de la première face et de la deuxième face, soit un réseau tubulaire percé soit un distributeur à plaque percée pour la distribution du fluide caloporteur.

Ces distributeurs percés imposent, au niveau des perçages, une perte de charge à l'écoulement du fluide caloporteur, et sont agencés pour dispenser le fluide caloporteur à l'aplomb de l'une ou l'autre de la première face et de la deuxième face.

Dans leur principe de fonctionnement, ces distributeurs forment une multitude de jets qui permettent, en fonction de leur distribution, de dispenser de manière relativement uniforme le fluide caloporteur au niveau de l'une ou l'autre de la première face et de la deuxième face.

Ces distributeurs ne sont toutefois pas satisfaisants.

En effet, la cuve est généralement disposée de sorte que le fluide caloporteur circule dans le milieu poreux selon une direction verticale, par exemple, de la première face (en position haute) vers la deuxième face (en position basse). Ainsi, le distributeur destiné à collecter le fluide caloporteur au niveau de la deuxième face se trouve sous le milieu poreux, et par voie de conséquence soumis aux contraintes mécaniques imposées par ledit milieu.

Par ailleurs, l'atteinte d'une distribution homogène du fluide caloporteur nécessite d'usiner un grand nombre de perçages, et donc d'augmenter le coût de fabrication du distributeur. Ces perçages, sont conformés pour créer une multitude de jets en recouvrement des uns des autres. Lesdits jets permettent ainsi de former un écoulement uniforme. Cet écoulement uniforme conduit ainsi en début et fin de charge ou de décharge à accroitre la zone de gradient thermique.

En enfin, chaque distributeur nécessite un développement pour sa fabrication qui est spécifique à la configuration du dispositif de stockage régénératif considéré.

De manière alternative, il a pu être considéré de mettre en œuvre une distribution du fluide caloporteur par simple piquage.

Toutefois, ce mode de distribution n'est pas non plus satisfaisant et reste sujet au colmatage.

Afin de pallier ce dernier problème, le document [3] cité à la fin de la description propose de mettre en œuvre, dans une partie basse de la cuve, une zone dépourvue de matière dispersée et délimitée par une grille.

Ce dispositif, bien qu'efficace pour prévenir tout colmatage d'un piquage disposé dans la partie basse de la cuve, doit néanmoins être dimensionné pour supporter les contraintes mécaniques imposées par le milieu poreux.

Toujours de manière alternative, il a pu être considéré de former un piquage pourvu d'un distributeur conique au niveau des piquages (document [4] cité à la fin de la description). Cette solution permet notamment de réduire progressivement la vitesse du fluide caloporteur.

Une telle solution n'est toutefois pas satisfaisante. En effet, un tel distributeur conique présente des dimensions qui sont fonction des caractéristiques géométriques de la cuve, de sorte qu'il ne peut facilement être envisagé lorsque que ladite cuve est de grande taille.

Une autre solution consisterait à mettre en œuvre un distributeur radial de contrôle de la trajectoire du fluide caloporteur tel que décrit dans le document [5] cité à la fin de la description. Ce type de distributeur généralement utilisé pour les dispositifs de régénération sans milieu poreux nécessite d'être dimensionné en fonction des caractéristiques de la cuve considérée. Par ailleurs, ce système pose des problèmes de performance au fond de la cuve dans le milieu poreux. En effet, un écoulement radial de ce type dans un milieu poreux n'est pas propice à une bonne distribution. Enfin ce système pose aussi des problèmes de dimensionnement mécaniques pour le bas de la cuve dans le milieu poreux.

Un but de la présente invention est donc de proposer un dispositif de stockage régénératif pourvu de moyens de distribution assurant une distribution uniforme du fluide caloporteur.

Un autre but de la présente invention est également de proposer un dispositif de stockage régénératif dont les moyens de distribution participent également au stockage de l'énergie thermique.

Un autre but de la présente invention est également de proposer un dispositif de stockage régénératif dont les moyens de distribution ne sont pas dépendant des caractéristiques dimensionnelles de la cuve.

Un autre but de la présente invention est également de proposer un dispositif de stockage régénératif dont les moyens de distribution sont moins sensibles aux contraintes mécaniques susceptibles d'être exercées par le milieu poreux.

Un autre but de la présente invention est également de proposer un dispositif de stockage régénératif dont les moyens de distribution sont meilleurs marché.

### EXPOSÉ DE L'INVENTION

Les buts sont, au moins en partie, atteints par un dispositif de stockage régénératif multi-milieu, le dispositif comprenant :
- une cuve de circulation d'un fluide caloporteur entre deux piquages dits respectivement piquage chaud et piquage froid,
- un milieu poreux, remplissant au moins en partie la cuve entre le piquage chaud et le piquage froid, et délimité par deux faces essentiellement parallèles, dites respectivement première face et deuxième face, et reliées par une surface latérale, le milieu poreux étant un milieu au sein duquel des échanges thermiques sont susceptibles d'intervenir avec le fluide caloporteur lorsque ce dernier circule de l'une de la première face et de la deuxième face vers l'autre de la première face et de la deuxième face dans ledit milieu,
le dispositif étant caractérisé en ce que le milieu poreux comprend, de la première face vers la deuxième face, une première strate d'un premier matériau dispersé d'une première granulométrie et une deuxième strate d'un deuxième matériau dispersé d'une deuxième granulométrie supérieure à la première granulométrie.

Selon un mode de mise en œuvre, le milieu poreux comprend également une troisième strate d'un troisième matériau dispersé d'une troisième granulométrie inférieure à la deuxième granulométrie, et disposé entre la deuxième strate et la deuxième face.

Selon un mode de mise en œuvre, l'extension de la deuxième strate selon une direction perpendiculaire à la première face représente au moins 1 % de l'extension totale du milieu poreux selon cette même direction.

Selon un mode de mise en œuvre, les extensions de la première et de la troisième strate selon la direction sont égales.

Selon un mode de mise en œuvre, la première granulométrie et la troisième granulométrie sont inférieures à 5mm.

Selon un mode de mise en œuvre, la cuve comprend un volume, dit volume froid, délimité par un fond, dit fond froid, de ladite cuve et la deuxième face, et dans lequel débouche le premier piquage, le volume froid étant rempli d'un quatrième matériau dispersé et qui présente un quatrième granulométrie supérieure à l'ouverture du piquage froid.

Selon un mode de mise en œuvre, une première grille de séparation et une deuxième grille de séparation viennent s'interposer, respectivement, entre la deuxième strate et la troisième strate d'une part, et la troisième strate et le volume froid d'autre part, la deuxième grille de séparation et la deuxième grille de séparation présentent chacune un maillage prévenant le passage du troisième matériau dispersé dans le volume froid et dans la deuxième strate.

Selon un mode de mise en œuvre, une troisième de séparation est disposée entre la première strate et la deuxième strate, ladite troisième grille de séparation étant destinée à prévenir tout passage du premier matériau dispersé vers la deuxième strate.

Selon un mode de mise en œuvre, la cuve comprend, adjacent à la première face, un volume, dit volume libre, et au niveau duquel le piquage chaud débouche.

Selon un mode de mise en œuvre, le fluide caloporteur résiste à toute dégradation lorsqu'il est soumis à des températures inférieures à 500 °C, avantageusement, le fluide caloporteur comprend une huile.

Selon un mode de mise en œuvre, le premier matériau dispersé et le troisième matériau dispersé comprennent du sable.

Selon un mode de mise en œuvre, ledit dispositif comprend un conduit de circulation qui forme avec la cuve un circuit de circulation fermé.

### BRÈVE DESCRIPTION DES DESSINS

D'autres caractéristiques et avantages apparaîtront dans la description qui va suivre d'un dispositif de stockage régénératif selon l'invention, donnés à titre d'exemples non limitatifs, en référence aux dessins annexés dans lesquels :
[Fig. 1] est une représentation schématique d'une cuve d'un dispositif de stockage régénératif connu de l'état de la technique, la cuve est notamment de forme cylindrique et est représentée selon un plan de coupe passant par l'axe de révolution de la cuve, ledit axe étant selon la direction verticale ;
[Fig. 2] est une représentation schématique d'une cuve, connu de l'état de la technique, de forme cylindrique selon un plan de coupe passant par l'axe de révolution du la cuve, le figure 2 représente notamment la cuve lors d'un cycle de charge ;
[Fig. 3] est une représentation schématique d'une cuve, connu de l'état de la technique, de forme cylindrique selon un plan de coupe passant par l'axe de révolution du la cuve, le figure 3 représente notamment la cuve lors d'un cycle de décharge ;
[Fig. 4] est une représentation schématique d'une cuve d'un dispositif de stockage régénératif selon la présente invention, la cuve est notamment de forme cylindrique et est représentée selon un plan de coupe passant par l'axe de révolution de la cuve, ledit axe étant selon la direction verticale ;
[Fig. 5] est une représentation de la cuve au niveau de la première strate et représente notamment le positionnement de grilles de séparations ;
[Fig. 6] est une représentation du bas de la cuve selon la présente invention et mettant en œuvre un diffuseur radiale.

### EXPOSÉ DÉTAILLÉ DE MODES DE RÉALISATION PARTICULIERS

La présente invention concerne un dispositif de stockage régénératif qui comprend une cuve au moins partiellement remplie d'un milieu poreux et pourvue deux piquages permettant d'assurer la circulation d'un fluide caloporteur au sein du milieu poreux. Avantageusement, la cuve est positionnée en une position verticale, telle que montrée sur la figure 1. La cuve est positionnée en position verticale de façon à ce que le fluide caloporteur circule du piquage chaud (2) vers le piquage froid (3) en direction d'une force de gravitation. De cette manière, la force de gravitation assure la stabilité du thermocline.

En particulier, le milieu poreux comprend un matériau dispersé. Le matériau dispersé est, à cet égard, formé, d'une première face vers une deuxième face du milieu poreux, d'une première strate d'un premier matériau d'une première granulométrie et d'une deuxième strate d'un deuxième matériau d'une deuxième granulométrie supérieure à la première granulométrie.

Le fluide caloporteur lorsqu'il est mis en circulation de la première face vers la deuxième face du milieu poreux, rencontre en premier lieu la première strate puis traverse la deuxième strate. Lors de cette traversée, il se produit un échange thermique entre ces deux strates et le fluide caloporteur. Par ailleurs, la plus faible granulométrie de la première strate confère à cette dernière une capacité à disperser le fluide caloporteur et ainsi à distribuer ce dernier de manière homogène dans la deuxième strate.

Un premier matériau de choix pour mettre en œuvre cet effet présentera avantageusement une première granulométrie inférieure à 5mm, et notamment comprise entre 0,05 mm et 5 mm.

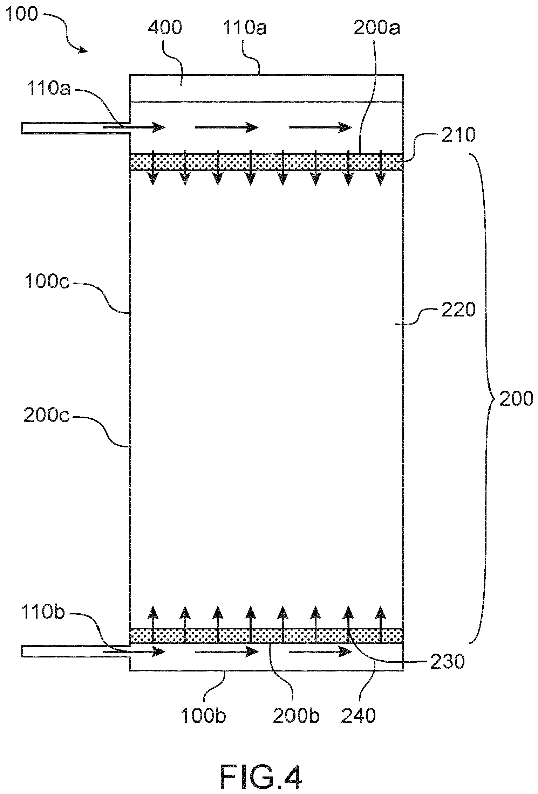

La figure 4 est une représentation schématique d'une cuve 100 d'un dispositif de stockage régénératif selon la présente invention. En particulier, la cuve 100 est une enceinte fermée, par exemple une enceinte métallique, notamment faite d'acier.

La cuve 100 peut être de forme cylindrique. La suite de la description se limitera à une cuve de forme cylindrique, toutefois, l'homme du métier avec ses connaissances générales et la description qui suit pourra mettre en œuvre tout autre type de forme.

La cuve 100 comprend un fond supérieur 100a et un fond inférieur 100b (ou base) reliées par une enveloppe latérale 100c. Avantageusement, il s'agit d'une unique cuve. Avantageusement, la cuve comprend un unique milieu poreux en entrée.

La cuve 100 comprend également deux piquages dits, respectivement, piquage chaud 110a et piquage froid 110b disposés, respectivement, dans une section supérieure et une section inférieure de la cuve 100, et destinés à permettre la circulation dans la cuve 100 d'un fluide caloporteur. Plus particulièrement, le piquage chaud 110a et le piquage froid 110b sont disposés à proximité, respectivement, du fond supérieur 100a et du fond inférieur 100b.

Le fluide caloporteur peut circuler, dans la cuve, dans un premier sens du piquage chaud 110a vers le piquage froid 110b ou dans un deuxième sens du piquage froid 110b vers le piquage chaud 110a.

Le fluide caloporteur selon la présente invention n'est pas limité à un fluide particulier. Toutefois, ce dernier pourra avantageusement comprendre une huile (par exemple de la therminol 66), et/ou résister à toute dégradation thermique tant qu'il est soumis à des températures inférieures à 500 °C.

Le dispositif de stockage régénératif comprend également un milieu poreux 200 qui remplit en partie le volume de la cuve disposé entre le piquage chaud 110a et le piquage froid 110b.

Plus particulièrement, le milieu poreux 200 comprend deux faces essentiellement parallèles, dites respectivement première face 200a et deuxième face 200b, et reliées par une surface latérale 200c.

Le milieu poreux 200, selon la présente invention, est un milieu au sein duquel des échanges thermiques sont susceptibles d'intervenir avec le fluide caloporteur lorsque ce dernier circule de l'une de la première face 200a et de la deuxième face 200b vers l'autre de la première face 200a et de la deuxième face 200b dans ledit milieu 200.

Il est entendu, sans qu'il soit nécessaire de le préciser que la surface latérale 200c du milieu poreux 200 est au contact d'une surface interne de la cuve 100 de sorte que le fluide caloporteur circule préférentiellement dans le milieu poreux 200.

Par convention, et pour toute la suite de la description, le premier sens correspond à une circulation du fluide caloporteur dans le milieu poreux 200 de sa première face 200a vers sa deuxième face 200b.

Inversement, toujours par convention, et pour toute la suite de la description, le deuxième sens correspond à une circulation du fluide caloporteur dans le milieu poreux 200 de sa deuxième face 200b vers sa première face 200a.

En d'autres termes, si le fluide caloporteur circule dans le premier sens, ce dernier est injecté dans la cuve 100 par le piquage chaud 110a, traverse le milieu poreux de la première face 200a vers la deuxième face 200b, et ressort de la cuve 100 par le piquage froid 110b.

Ce premier sens définit selon la présente invention un cycle de charge, à savoir un cycle au cours duquel le fluide caloporteur cède son énergie thermique au milieu poreux à des fins de stockage.

De manière équivalente, si le fluide caloporteur circule dans le deuxième sens, ce dernier est injecté dans la cuve 100 par le piquage froid 110b, traverse le milieu poreux 200 de la deuxième face 200b vers la première face 200a, et ressort de la cuve 100 par le piquage chaud 110a.

Ce deuxième sens définit selon la présente invention un cycle de décharge, à savoir un cycle au cours duquel le fluide caloporteur capte l'énergie thermique stockée par le milieu poreux à des fins d'utilisation et/ou de consommation.

Le milieu poreux 200, selon la présente invention, comprend, de la première face 200a vers la deuxième face 200b, une première strate 210 d'un premier matériau dispersé d'une première granulométrie et une deuxième strate 220 d'un deuxième matériau dispersé d'une deuxième granulométrie supérieure à la première granulométrie. En d'autres termes, lorsque le fluide caloporteur circule dans le premier sens, il traverse en premier lieu la première strate 210 puis la deuxième strate 220.

Il est entendu qu'une granulométrie, selon la présente invention, est une grandeur moyenne à laquelle est associée au moins une distribution. Ainsi, lorsqu'il est fait référence à une granulométrie, cette dernière peut être relative un matériau granulaire homogène ou le résultat d'un mélange de matériaux granulaires présentant des granulométries différentes.

Aussi, la considération d'une première granulométrie inférieure à la deuxième granulométrie permet d'imposer une perte de charge plus importante dans la première strate 210 que dans la deuxième strate 220.. Ainsi, la simple considération de la première strate 210 selon les termes de la présente invention, permet d'envisager une répartition uniforme de l'écoulement du fluide caloporteur dans la deuxième strate, et par voie de conséquence, une amélioration de l'efficacité des échanges thermiques entre le milieu poreux 200 et le fluide caloporteur lors d'un cycle de charge.

Il est par ailleurs notable que tant le premier matériau que le deuxième matériau participent aux échanges thermiques avec le fluide caloporteur.

De manière particulièrement avantageuse, le milieu poreux 200 peut comprendre une troisième strate 230 d'un troisième matériau dispersé d'une troisième granulométrie inférieure à la deuxième granulométrie, et disposé entre la deuxième strate et la deuxième face. Par exemple, la première granulométrie et la troisième granulométrie sont égales et/ou inférieures à 5 mm.

La considération d'une troisième granulométrie inférieure à la première granulométrie permet d'imposer une perte de charge plus importante dans la troisième strate que dans la deuxième strate 220, dans la troisième strate 230 avant qu'il n'atteigne la deuxième strate 220. Ainsi, la simple considération de la troisième strate 210 selon les termes de la présente invention, permet d'envisager une répartition uniforme de l'écoulement du fluide caloporteur dans la deuxième strate 220, et par voie de conséquence, une amélioration de l'efficacité des échanges thermiques entre le milieu poreux 200 et le fluide caloporteur lors d'un cycle de décharge.

Il est par ailleurs notable que le troisième matériau participe aux échanges thermiques avec le fluide caloporteur.

Toujours de manière avantageuse, la deuxième strate présente une extension selon une direction perpendiculaire à la première face représente au moins 1 % de l'extension totale du milieu poreux selon cette même direction.

Par ailleurs, les extensions de la première et de la troisième strate selon la direction peuvent également être égales.

La cuve 100 peut avantageusement comprendre un volume, dit volume froid 240, délimité par le fond inférieur 100b et la deuxième face 200b rempli d'un quatrième matériau dispersé, et dans lequel débouche le piquage froid. Notamment, le quatrième matériau présent une granulométrie suffisante pour le pas être entraîné, par le fluide, dans le piquage froid.

Ainsi, lorsque la cuve 100 est disposée verticalement (avec le fond inférieur 100b vers le bas), le quatrième matériau permet d'isoler l'embouchure du piquage froid de la troisième strate 230 et ainsi éviter tout colmatage du piquage froid par le troisième matériau.

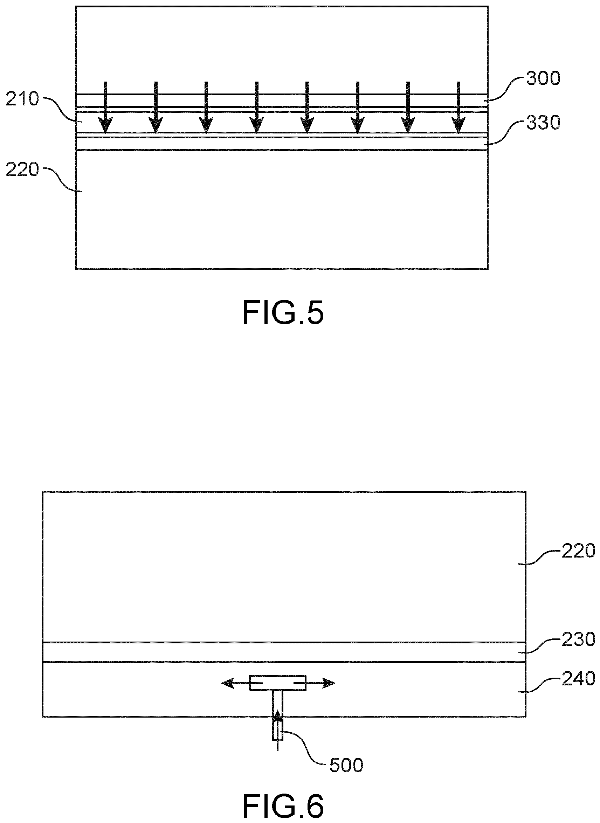

De manière avantageuse, une première grille de séparation 300 (figure 5) et une deuxième grille de séparation viennent s'interposer, respectivement, entre la deuxième strate et la troisième strate d'une part, et la troisième strate et le volume froid d'autre part, la deuxième grille de séparation et la deuxième grille de séparation présentent chacune un maillage prévenant le passage du troisième matériau dispersé dans le volume froid et dans la deuxième strate 220.

Toujours de manière avantageuse, une troisième grille de séparation 330 (figure 5) est disposée entre la première strate et la deuxième strate, ladite troisième grille de séparation étant destinée à prévenir tout passage du premier matériau dispersé vers la deuxième strate.

Toujours de manière avantageuse, la cuve 100 peut comprendre, adjacent à la première face 200a, un volume, dit volume libre 400, et au niveau duquel le piquage chaud débouche. Ce volume peut par ailleurs être dimensionné pour accommoder toute expansion thermique du fluide caloporteur et ainsi jouer le rôle de vase d'expansion.

De manière avantageuse le premier matériau dispersé et le troisième matériau dispersé comprennent du sable. Ce matériau abondant, et d'un coût relativement faible, permet ainsi de former la première strate et la deuxième strate qui jouent de rôle de distributeur dépendamment du sens d'écoulement du fluide caloporteur, et participe également aux échangent thermique.

Ces deux distributeurs, contrairement à ceux connus de l'état de la technique, nécessitent pour seul dimensionnement que la détermination de leur épaisseur.

En outre ces deux strates ne sont pas sensibles aux contraintes mécaniques auxquelles elles sont soumises.

Le deuxième matériau et le quatrième matériau peuvent comprendre de la roche et/ou des cailloux éventuellement mélangés avec du sable.

La deuxième et la quatrième granulométrie sont avantageusement supérieures à 10 mm.

Enfin, le dispositif de stockage régénératif peut comprendre un conduit de circulation qui forme avec la cuve un circuit de circulation fermé.

Les inventeurs ont par ailleurs comparé, de manière théorique, la distribution du fluide caloporteur d'une cuve connue de l'état de la technique et de la même cuve pourvue d'une première strate formée de sable selon la présente invention.

Les caractéristiques de la cuve connue de l'état de la technique sont données dans le tableau ci-après :

**[Tableau 1]**

| | | | |
|---|---|---|---|
| **Fluide de travail** | | | |
| Masse volumique du fluide caloporteur | ρ | 807 | kg/m3 |
| Viscosité dynamique du fluide | µ | 0,000416 | Pa.s |
| **Dimensions de la cuve** | | | |
| Diamètre de cuve | Dcuve | 10,5 | m |
| Epaisseur du milieu poreux | L | 15 | m |
| Volume de la cuve | Vol | 1298,9 | m³ |
| Diamètre des piquages chaud/froid | | 0,4 | m |
| **Données thermo-hydraulique** | | | |
| Température chaude | T | 300 | °C |
| Température froide | T | 100 | °C |
| Débit massique maximal | Q | 80 | kg/s |
| **Milieu poreux** | | | |
| Porosité roche | ε_{roche} | 31,62 | % |
| Diamètre roche | d_{roche} | 26,2 | mm |
| Porosité sable | ε_{sable} | 64,90 | % |
| Diamètre sable | d_{sable} | 2,5 | mm |
| Porosité totale | ε | 27,0 | % |
| | | | |
| Volume de roche | Vr | 758,5 | m3 |
| Volume de sable | Vs | 189,6 | m3 |
| Volume de fluide | Vf | 350,7 | m3 |
| Pourcentage volumique de roche | %Vr | 58,4 | % |
| Pourcentage volumique de sable | %Vs | 14,6 | % |
| Pourcentage volumique de fluide | %Vf | 27,0 | % |
| | | | |
| Vitesse du fluide en fut vide | u | 1,14 | mm/s |
| Vitesse du fluide à travers le lit poreux | V | 4,24 | mm/s |

Les caractéristiques de la première strate sont données ci-après :

**[Tableau 2]**

| | | | |
|---|---|---|---|
| Porosité globale | ε_{global} | 0,35 | |
| Epaisseur de la première strate | L | 1 | m |
| Porosité du sable | ε_{sable} | 0,35 | |
| Diamètre sable | d_{sable} | 0,001 | m |

L'amélioration en termes de distribution atteint 26 % lorsque la première strate est mise en œuvre.

Une telle distribution permet d'améliorer l'efficacité des échanges thermique et par voie de conséquence le rendement globale du dispositif de stockage régénératif.

La présente invention peut également être combinée avec des systèmes de distribution connus de l'état de la technique.

Notamment, il peut être envisagé de mettre en œuvre un diffuseur radial 500 débouchant dans le volume froid (figure 6).

### RÉFÉRENCES

[1] R. W. Hallet and R. L. Gervais, "Central receiver solar thermal power system; Phase 1 Final report; CDRL item 8; Thermal storage Subsystem research experiment; Détail design report" McDonnel-Douglas Astronautics Compagny, 1976 ;
[2] Y. H. Zurigat, A. J. Ghajar, and P. M. Moretti, "Startified Thermal Storage Tank Inlet Mixing Characterization", Appl. Energy, no. 30, pp. 99-111, 1988;
[3] G. Zanganeh, A. Pedretti, S. Zavattoni, M. Barbato, and A. Steinfeld, "Packed-bed thermal storage for concentrated solar power - Pilot-scale démonstration and industrial-scale design", Sol. Energy, vol. 86, no. 10, pp. 3084-3098, Oct. 2012 ;
[4] V. Panthalookaran, W. Heidemann, and H. Müller-Steinhagen, "The effects of momentum diffusers and flow guides on the efficiency of stratified hot water seasonal heat stores", Int. J. Energy Res., vol. 32, no. 10, pp. 911-925, Aug. 2008;
[5] KR101613822.

## Revendications

1. Dispositif de stockage régénératif multi-milieu, le dispositif comprenant :
- une cuve (100) de circulation d'un fluide caloporteur entre deux piquages dits respectivement piquage chaud (110a) et piquage froid (110b),
- un milieu poreux (200), remplissant au moins en partie la cuve (100) entre le piquage chaud (110a) et le piquage froid (110b), et délimité par deux faces essentiellement parallèles, dites respectivement première face (200a) et deuxième face (200b), et reliées par une surface latérale (200c), le milieu poreux (200) étant un milieu au sein duquel des échanges thermiques sont susceptibles d'intervenir avec le fluide caloporteur lorsque ce dernier circule de l'une de la première face (200a) et de la deuxième face (200b) vers l'autre de la première face (200a) et de la deuxième face (200b) dans ledit milieu,
le dispositif étant **caractérisé en ce que** le milieu poreux (200) comprend, de la première face (200a) vers la deuxième face (200b), une première strate (210) d'un premier matériau dispersé d'une première granulométrie et une deuxième strate (220) d'un deuxième matériau dispersé d'une deuxième granulométrie, la deuxième granulométrie étant supérieure à la première granulométrie.

2. Dispositif selon la revendication 1, dans lequel le milieu poreux (200) comprend également une troisième strate (230) d'un troisième matériau dispersé d'une troisième granulométrie inférieure à la deuxième granulométrie, et disposé entre la deuxième strate (220) et la deuxième face (200b).

3. Dispositif selon la revendication 2, dans lequel l'extension de la deuxième strate (220) selon une direction perpendiculaire à la première face (200a) représente au moins 1 % de l'extension totale du milieu poreux (200) selon cette même direction.

4. Dispositif selon la revendication 3, dans lequel les extensions de la première et de la troisième strate (230) selon la direction sont égales.

5. Dispositif selon l'une des revendications 2 à 4, dans lequel la première granulométrie et la troisième granulométrie sont inférieures à 5 mm.

6. Dispositif selon l'une des revendications 2 à 5, dans lequel la cuve (100) comprend un volume, dit volume froid (240), délimité par un fond, dit fond inférieur, de ladite cuve (100) et la deuxième face (200b), et dans lequel débouche le premier piquage, le volume froid (240) étant rempli d'un quatrième matériau dispersé et qui présente un quatrième granulométrie supérieure à l'ouverture du piquage froid (110b).

7. Dispositif selon la revendication 6, dans lequel une première grille de séparation et une deuxième grille de séparation viennent s'interposer, respectivement, entre la deuxième strate (220) et la troisième strate (230) d'une part, et la troisième strate (230) et le volume froid (240) d'autre part, la deuxième grille de séparation et la deuxième grille de séparation présentent chacune un maillage prévenant le passage du troisième matériau dispersé dans le volume froid (240) et dans la deuxième strate (220).

8. Dispositif selon l'une des revendications 2 à 7, dans lequel une troisième de séparation (330) est disposée entre la première strate (210) et la deuxième strate (220), ladite troisième grille de séparation étant destinée à prévenir tout passage du premier matériau dispersé vers la deuxième strate (220).

9. Dispositif selon l'une des revendications 2 à 8, dans lequel la cuve (100) comprend, adjacent à la première face (200a), un volume, dit volume libre (400), et au niveau duquel le piquage chaud (110a) débouche.

10. Dispositif selon l'une des revendications 2 à 9, dans lequel le fluide caloporteur résiste à toute dégradation lorsqu'il est soumis à des températures inférieures à 500 °C, avantageusement, le fluide caloporteur comprend une huile.

11. Dispositif selon l'une des revendications 2 à 10, dans lequel le premier matériau dispersé et le troisième matériau dispersé comprennent du sable.

12. Dispositif selon l'une des revendications 1 à 11, dans lequel ledit dispositif comprend un conduit de circulation qui forme avec la cuve (100) un circuit de circulation fermé.
